(19) Europäisches Patentamt

European Patent Office

Office européen des brevets

(11) Veröffentlichungsnummer: **0 313 923 B1**

## (12) EUROPÄISCHE PATENTSCHRIFT

(45) Veröffentlichungstag der Patentschrift: **03.03.93**

(51) Int. Cl.⁵: **B29C 33/52**

(21) Anmeldenummer: **88116976.7**

(22) Anmeldetag: **13.10.88**

(54) Verfahren und Formkern zur Herstellung von Kunststoffgegenständen mit Hinterschneidungen.

(30) Priorität: **28.10.87 DE 3736574**

(43) Veröffentlichungstag der Anmeldung:
**03.05.89 Patentblatt 89/18**

(45) Bekanntmachung des Hinweises auf die
Patenterteilung:
**03.03.93 Patentblatt 93/09**

(84) Benannte Vertragsstaaten:
**AT CH DE ES FR GB IT LI SE**

(56) Entgegenhaltungen:
**BE-A- 632 865**
**FR-A- 2 080 725**
**FR-A- 2 613 659**
**US-A- 3 717 485**
**US-A- 3 970 495**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Altmann, Otto**
**Dieselstrasse 10**
**W-8011 Kirchheim(DE)**

EP 0 313 923 B1

**Beschreibung**

Die Erfindung bezieht sich auf ein Verfahren und einen Formkern zur Herstellung von Kunststoffgegenständen, die Hinterschneidungen aufweisen, insbesondere von Kunststoffhohlkörpern, wobei der Formkern zumindest teilweise aus einem löslichen, thermoplastisch verarbeitbaren Kunststoff besteht.

Um Kunststoffgegenstände oder -bauteile mit komplizierten Hinterschneidungen herzustellen, werden Formkerne verwendet, die nach dem Ummanteln mit der Kunststoffmasse, aus der der Gegenstand hergestellt werden soll, z. B. durch Schmelzen oder Lösen entfernt werden. Solche Formkerne werden insbesondere zur Herstellung von Kunststoffhohlkörpern verwendet, wobei der Formkern die Geometrie des Hohlraumes des Hohlkörpers bestimmt.

Schmelzbare Formkerne bestehen dabei im allgemeinen aus niedrig-schmelzenden Metall-Legierungen (vgl. z. B. DE-OS 29 22 303 oder EP 0 178 093), während für lösliche Formkerne z. B. Salz/Sand-Gemische mit wasserlöslichen Salzen, wie Alkalinitrate, eingesetzt werden (vgl. z. B. US-PS 4 590 026).

Die Salzkerne sind äußerst spröde, entsprechend schwer zu handhaben und kommen nur zur Herstellung von Kunststoffteilen mit kleinem Durchmesser zum Einsatz.

Bei der Herstellung größerer Bauteile ist man daher auf Metallkerne angewiesen. Metallkerne sind jedoch mit einer Reihe von Nachteilen behaftet. So ist die dafür notwendige Einrichtung und das Personal, das den Metallguß beherrscht, in kunststoffverarbeitenden Betrieben meist nicht vorhanden. D. h. es sind hohe Investitionskosten für eine Metallgießerei mit induktivem Ofen zum Schmelzen des Metallkerns usw. sowie entsprechendes Fachpersonal erforderlich.

Weiterhin sind die für ausschmelzbare Metallkerne erforderlichen Legierungen relativ teuer. Hinzu kommt der erhebliche Energieverbrauch, insbesondere zur Herstellung der Metallschmelze zum Gießen des Formkerns bzw. zum Ausschmelzen mit dem induktiven Ofen. Ein großer Nachteil ist weiterhin das enorme Gewicht des Metallkerns und damit des den Metallkern enthaltenen Kunststoffbauteils von z. B. 50kg oder mehr. Dies erschwert zum einen die Handhabung, zum anderen hat sich gezeigt, daß der Metallkern in dem noch nicht ausgehärteten Kunststoffgegenstand aufgrund seines großen Gewichts nach unten sinken und damit zu unerwünschten Änderungen der Wandstärke des Kunststoffgegenstandes führen kann.

Auch sind bereits Formkerne aus löslichen, thermoplastisch verarbeitbaren Kunststoffen beschrieben worden. So ist es aus der DE-PS 956 985 bekannt, zur Herstellung von Nadelrollen-Käfigen aus Polyamid einen Hohlräume für die Käfigstege aufweisenden Formkern aus Polystyrol zu verwenden, der nach Umspritzen und Erhärten des Polyamids durch Lösen in Benzol entfernt wird. Abgesehen davon, daß Polyamid hoch flexibel ist und damit eine Zwangsentformung der Käfige erheblich einfacher als das Lösen des Polystyrol in Benzol ist, ist die Verwendung von Benzol aus gesundheitlichen und sicherheitstechnischen Gründen überaus problematisch. Darüberhinaus ist die anfallende Benzol/Polystyrollösung als Sondermüll nur mit großem Aufwand beseitigbar. Ferner können nach diesem Verfahren nur Gegenstände aus ganz speziellen Kunststoffen hergestellt werden, nämlich nur solche, die gegenüber Benzol resistent sind.

Im wesentlichen die gleichen Probleme ergeben sich nach der JP-OS 61-72506 (Abstract), wonach zur Herstellung eines Kolbens z. B. aus Polyamid mit einer Nut zur Bildung der Nut ein Kern aus Polyacrylnitril, Polyacrylat oder Polycarbonat verwendet wird, der nach dem Spritzen des Kolbens durch Lösen in einem Lösungsmittel entfernt wird.

Aus der DE-AS 12 19 665 ist es bekannt, Hartschaumkerne zur Herstellung von Kunststoffgegenständen zu verwenden. Zwar ist in dieser Druckschrift angegeben, daß der Schaumstoffkern gelöst und der gelöste Kunststoff wiederverwendet werden kann. Dies steht jedoch im Widerspruch dazu, daß ein Hartschaum ein dreidimensional vernetztes Produkt darstellt, das nicht bzw. allenfalls nur durch Zerstörung des Netzwerks und damit des Polymerisats gelöst werden kann.

Aus BE-A-632.865 geht ein Formkern hervor, der aus wasserlöslichen Salzen und einem wasserlöslichen, wachsweichen Polymerisat als Bindemittel besteht. Ein Formkern mit einem wachsweichen Bindemittel weist jedoch nur eine geringe mechanische Festigkeit auf.

Aufgabe der Erfindung ist es daher, ein Verfahren bereitzustellen, mit dem auch relativ große Kunststoffbauteile mit komplizierten Hinterschneidungen oder Hohlräumen ohne eine Gießerei hergestellt werden können, und zwar unter Verwendung eines einfach herzustellenden und zu handhabenden, d. h. insbesondere robusten und leichten, schnell entfernbaren und keine Müll- oder sonstige Probleme bereitenden Formkerns.

Dies wird erfindungsgemäß mit einem Verfahren bzw. einem Formkern nach dem Anspruch 1 bzw. dem Anspruch 21 erreicht. In den Unteransprüchen sind vorteilhafte Ausgestaltungen der Erfindung wiedergegeben.

Der erfindungsgemäße Formkern besteht also zumindest teilweise aus einem Polymerisat, welches in wässriger Lösung löslich ist. Das Polymerisat kann aus der wässrigen Lösung, z. B. durch Einengen oder Abkühlen der Losung oder pH-Wert-Verschiebung ausgefällt und dann wiederverwendet werden.

Das erfindungsgemäß verwendete Polymerisat ist thermoplastisch verarbeitbar, um den Kern herstellen zu konnen, also z. B. ein spritz- oder pressfähiger thermoplastischer Kunststoff.

Damit der Formkern zur Herstellung des Kunststoffgegenstandes umspritzt werden kann, sollte das für den Formkern verwendete Polymerisat ferner eine Glasübergangstemperatur von mehr als 35ºC und eine Schmelztemperatur von mehr als 80ºC, vorzugsweise mehr als 150ºC besitzen.

Wesentlich ist ferner, daß der Formkern ausreichende mechanische Eigenschaften besitzt. Der Biege-E-Modul des Formkerns beträgt mindestens 5.000N/mm$^2$, vorzugsweise mindestens 10.000N/mm$^2$, und die Bruchdehnung vorzugsweise weniger als 5%, insbesondere weniger als 1%. Diese mechanischen Eigenschaften sind vor allem dann wichtig, wenn der Formkern z. B. zur Erhöhung der Losungsgeschwindigkeit hohl ausgebildet wird, d. h. eine geringe Wandstärke aufweist.

Das für den erfindungsgemäßen Formkern eingesetzte Polymerisat ist in neutraler oder alkalischer wässriger Lösung löslich. Dazu weist es vorzugsweise COOH-Gruppen auf.

Der Anteil der COOH-Gruppen beträgt dabei vorzugsweise mindestens 20 Gew.-% des Polymerisats, d. h. in 225g Polymerisat liegen mindestens 45g (1 Mol) COOH-Gruppen vor. Wenn dieser Wert unterschritten wird, läßt nicht nur die Löslichkeit des Polymerisats zu wünschen übrig, vielmehr fällt dann auch die mechanische Festigkeit (Biege-E-Modul) des Kerns drastisch ab, während umgekehrt mit zunehmendem Anteil der COOH-Gruppen des Polymerisats die Festigkeit des Formkerns zunimmt.

Als COOH-Gruppen-haltige Polymerisate sind insbesondere Polymerisate oder Copolymerisate geeignet, die eine ungesättigte Carbonsäure als Monomeres oder Comonomeres enthalten, z. B. Acrylsäure, Methacrylsäure, Crotonsaure, Itaconsäure, Malein- oder Fumarsäure.

Besonders bevorzugt werden erfindungsgemäß Polymerisate auf Acrylsäure- bzw. Methacrylsäure-Basis eingesetzt, und zwar insbesondere Copolymerisate der (Meth)-Acrylsäure mit (Meth)-Acrylat sowie gegebenenfalls einem neutralen Termonomeren, beispielsweise ein Copolymerisat aus 3 bis 0,5 mol (Meth)-Acrylat pro mol (Meth)-Acrylsäure und 0 bis 1 mol eines neutralen Termonomeren, das von (Meth)-Acrylat verschieden ist. Derartige Polymerisate sind in der unter der Nummer 0 143 935 veröffentlichten europäischen Patentanmeldung beschrieben.

Als (Meth)-Acrylat wird vorzugsweise Methylmethacrylat oder Ethylmethacrylat bzw. Methylacrylat oder Ethylacrylat eingesetzt. Als Termonomere sind z. B. Vinyläther mit 3 bis 18 Kohlenstoffatomen sowie aromatische Vinylkohlenwasserstoffe mit 8 bis 11 Kohlenstoffatomen sowie Acrylate oder Methacrylate mit einem Alkoholrest von 11 bis 18 Kohlenstoffatomen geeignet.

Aufgrund ihrer hohen Wasserlöslichkeit kann das Polymerisat z. B. auch Hydroxyethyl- oder Hydroxypropyl-(Meth)-Acrylat als Comonomeres enthalten.

Insbesondere wenn ein Formkern aus einem Gemisch aus dem Polymerisat und einem Füllstoff, z. B. durch Spritzen hergestellt werden soll, ist es zweckmäßig, dem Polymerisat 0,1 bis 3% eines Gleit- oder Fließmittels, wie Stearat oder Talkum, bezogen auf das Gewicht des Polymerisats, zuzusetzen.

Ferner beträgt der Restmonomer-Anteil im Polymerisat vorzugsweise höchstens 0,5 Gew.-%, insbesondere weniger als 0,3 Gewichtsprozent. Bei höheren Restmonomer-Gehalten läßt nämlich die Festigkeit des Formkerns zu wünschen übrig.

Die Herstellung der für den erfindungsgemäßen Formkern verwendeten Polymerisate wird vorzugsweise mit einem Reaktionsextruder durchgeführt, wie er in der unter der Nummer 0 143 894 veröffentlichten europäischen Patentanmeldung beschrieben ist.

Die erfindungsgemäßen Formkerne weisen den großen Vorteil auf, daß sie recycling-fähig sind. Falls ein in neutraler oder alkalischer wässriger Lösung lösliches Polymerisat verwendet wird, kann dieses nach dem Lösen des Formkerns durch Einengen und/oder Abkühlen der Lösung ausgefällt werden. Ein in alkalischer wässriger Lösung gelöstes Polymerisat kann zum Ausfällen auch mit einer Säure neutralisiert oder angesäuert werden. Beim Ansäuern bzw. Neutralisieren der alkalischen Lösung entstehen allerdings Salze.

Das Abtrennen des ausgefällten Polymerisats kann z. B. durch Filtrieren oder Zentrifugieren erfolgen. Das abgetrennte Polymerisat wird nach dem Trocknen einem Compounder zugeführt. Das compoundierte Polymerisat wird anschließend granuliert, gegebenenfalls mit Fließmittel oder Füllstoff gemischt und dann zur Herstellung neuer Formkerne wiederverwendet.

Damit beim Umspritzen des Formkerns kein Sprödbruch auftritt, beträgt die Schlagzähigkeit des erfindungsgemäßen Formkerns vorzugsweise mehr als 1,0kJ/m$^2$. Im Hinblick auf eine hinreichende Fließfähigkeit zum Spritzen des Formkerns beträgt der rheologische Kennfaktor oder MFI-Faktor vorzugsweise mindestens 3.

Der erfindungsgemäße Formkern besteht vorzugsweise aus einem Gemisch aus dem Polymerisat und einem Füllstoff. Als solche in die Polymermatrix eingebettete Füllstoffe kommen z. B. Sand oder Gesteinsmehl in Betracht.

Eine erhebliche Steigerung der Lösungsgeschwindigkeit des erfindungsgemäßen Formkerns wird jedoch erreicht, wenn als Füllstoff ein wasserlösliches Salz eingesetzt wird. Dabei haben sich Sulfate und Nitrate, insbesondere Alkalisulfate bzw. -nitrate, wie Natriumsulfat bzw. -nitrat, als besonders geeignet erwiesen, während Chloride, wie Natriumchlorid, unter anderem auch deshalb weniger geeignet sind, weil sie die Werkzeuge angreifen.

Der Anteil des Kunststoffs in dem Kunststoff/Füllstoff-Gemisch sollte jedoch mindestens 25, vorzugsweise mindestens 40 Gew.-% betragen, damit der Formkern zufriedenstellende mechanische Eigenschaften aufweist. Die mechanischen Eigenschaften werden auch durch den Salzanteil verbessert. Er beträgt vorzugsweise mindestens 40 Gew.-%.

Auch kann dem Kunststoff ein Treibmittel zugesetzt werden. So führt ein TSG (Thermoplast- oder Treibmittel-Schaum-Guß) mit einem Zusatz von 2 Gew.-% eines festen Treibmittels, welches von der Firma LNP unter der Bezeichnung FOR CON 20 erhältlich ist, zu einer Gewichtsreduzierung des Formkerns um 33% und einer Erhöhung der Lösungsgeschwindigkeit des Kerns. Jedoch sollte der Zusatz des festen Treibmittels nicht mehr als 5 Gew.-% betragen, da dann die mechanischen Eigenschaften des Kerns zu wünschen übrig lassen.

Bei einem im Alkalischen löslichen Kern ist es ferner zweckmäßig, zur Erhöhung der Lösungsgeschwindigkeit dem Kunststoff feste alkalische Stoffe, wie Alkalihydroxid oder -carbonat, einzuverleiben.

Um die Lösungsgeschwindigkeit zu erhöhen, wird der Formkern erfindungsgemäß vorzugsweise hohl ausgebildet, d. h. er weist einen durchgehenden Kanal auf, durch den man das wässrige Lösungsmittel, im Falle eines im alkalischen löslichen Kunststoffs also die alkalische Lösung, strömen läßt, um den Formkern nach dem Ummanteln unter Bildung des Kunststoffgegenstandes aus demselben herauszulösen.

Die Herstellung des hohlen Formkerns erfolgt vorzugsweise durch Hohlkörperspritzen oder mit dem Cinpreß-Verfahren. Dabei können auch relativ große Wandstärkenänderungen des Kerns ohne weiteres hingenommen werden. Jedoch ist auch jedes andere zur Herstellung von Kunststoffhohlkörpern geeignete Formverfahren anwendbar. Ferner ist es denkbar, Halbschalen aus dem Kunststoff zu spritzen oder sonstwie zu formen, die dann miteinander z. B. durch Kleben oder Klammern zum Kern verbunden werden.

In Bereichen, in denen der Formkern, wenn er mit der Kunststoffmasse umhüllt wird, aus der der gewünschte Kunststoffgegenstand hergestellt wird, einem hohen Massedruck ausgesetzt ist, kann der Formkern vorzugsweise mit Verstärkungsteilen versehen, beispielsweise aus Metall.

Ferner können in den Formkern Einleger (Inserts) integriert werden, die aus ihm herausragen und in die Masse des den Kern umhüllenden Kunststoffs eingeschlossen und damit in dem Kunststoffgegenstand fixiert werden.

Das Umhüllen des Kerns mit der Kunststoffmasse kann durch Umgießen, Umwickeln, Umspritzen, Umschäumen, Umblasen, Umpressen, Umlaminieren oder Pultrudieren erfolgen.

Als Grundstoffe zum Umhüllen des Kerns, d. h. zur Herstellung des Kunststoffgegenstandes, können Thermoplaste, Duroplaste, Elastomere sowie thermoplastische Elastomere mit und ohne Faserverstärkung sowie mit und ohne Additiven, wie Gleitmittel, Antioxidantien, Pigmente usw., verwendet werden.

Das Gießen kann mit Duro- und Thermoplasten erfolgen. Zum Umwickeln werden mit Duroplasten getränkte Rovings oder Bänder verwendet. Zum Spritzen können Thermoplaste oder thermoplastische Elastomere, aber auch Duroplaste verwendet werden. Das Umschäumen wird vorzugsweise mit Polyurethan- oder Thermoplastschäumen durchgeführt. Zum Umblasen werden vorzugsweise Thermoplaste eingesetzt, während sich zum Umpressen Duroplaste bzw. zum Heißpressen Prepregs eignen. Zum Umlaminieren können beispielsweise auch faserverstärkte Duroplaste oder Thermoplaste verwendet werden.

Das Umspritzen des Kerns mit Thermoplasten wird jedoch im allgemeinen bevorzugt. Als Thermoplaste werden dabei vorteilhaft Polyamide (PA 6.6) Polyethylenterephthalat (PETP), Polybutylen (PBTP), Polyethersulfone (PESU), Polyacrylamide (PAA), Polyetherimide (PEI), Polyetheretherketone (PEEK), Polyethersulfone (PESU), Polyphenylensulfon (PPS) sowie Polyacrylimid (PAI) verwendet.

Der eingesetzte Kunststoff soll dabei temperatur- bzw. hoch temperaturfest sein, d. h. vorzugsweise eine Temperaturbeständigkeit von mehr als 150°C besitzen.

Das Lösen des Formkerns erfolgt erfindungsgemäß vorzugsweise mit einer erwärmten wässrigen Lösung, vorzugsweise mit einer Temperatur von etwa 100°C oder knapp darunter.

Bei einem Formkern aus einem in alkalischer Lösung löslichen Kunststoff wird zum Lösen vorzugsweise ein Alkalihydroxid oder -carbonat oder Ammoniak verwendet. Dazu kann der mit dem Kunststoffgegenstand ummantelte Formkern in die alkalische Lösung gelegt, mit ihr bespritzt oder gespült werden. Eine hohe Lösungsgeschwindigkeit wird z. B. erzielt, wenn der Formkern mit dem Kunststoffgegenstand in einem Autoklaven bei erhöhter Temperatur und erhöhtem Druck einem Ammoniak/Wasserdampf-Gemisch ausgesetzt wird.

Damit das erfindungsgemäße Verfahren wirtschaftlich durchführbar ist, sollte die zum Lösen des Kerns erforderliche Zeit bei einer Temperatur von 100°C bei einer Wandstärke des Kerns von 5 bis 10mm, weniger als 30 Minuten betragen.

Es ist ersichtlich, daß das erfindungsgemäße Verfahren "on line", d. h. ohne einen aus der Kunststofftechnik ausgelagerten Fertigungsprozeß durchführbar ist. Der Kunststoff für den Kern aus relativ billigen Ausgangsmaterialien hergestellt werden.

Das erfindungsgemäße Verfahren ist beispielsweise zur Herstellung von Kunststoffbauteilen in der Automobilindustrie hervorragend geeignet. So können z. B. folgende Kunststoffbauteile nach dem erfindungsgemäßen Verfahren hergestellt werden: Ansauganlagen, Kühlmittelsammler, Einspritzleiste für Kraftstoffeinspritzsonden, Drosselklappenstutzen, Wasserpumpengehäuse, Druckbehälter z. B. für Hochdruckwaschanlagen, Achsschenkelhalterung usw.

Nachstehend ist die Erfindung anhand der Zeichnung näher erläutert, deren einzige Figur einen schematischen Ablaufplan einer Ausführungsform des erfindungsgemäßen Verfahrens mit den Stationen A bis D wiedergibt.

Danach wird gemäß Station D ein Krümmer 1 mit Ansatz 2 für die Ansauganlage des Verbrennungsmotors eines Kraftfahrzeuges hergestellt. Dabei wird in Station A zum Hohlkörperspritzen eines Formkerns 3 mit einem Hohlraum 4 eine Form 5 aus zwei Teilen 6 und 7 und einem Angußstutzen 8 verwendet. Über die Blas-Spritzdüse 9 wird eine Füllstoff-haltige thermoplastische Kunststoffmasse zugeführt, wobei über eine in der Achse der Spritzdüse 9 angeordnete nicht dargestellte Druckluftleitung Luft zugeführt wird.

Der Formkern 3 wird anschließend entformt, worauf die Polkappen 10, 11 abgetrennt werden, so daß aus dem Hohlraum 4 ein durchgehender Kanal entsteht.

Anschließend wird der Formkern 3 zum Umspritzen mit der Kunststoffmasse, aus der der Krümmer 1 hergestellt wird, in eine teilbare Form 12 mit einem Angußstutzen 13 gegeben (Station B), worauf mit der Spritzdüse 14 der Kern 3 mit der Kunststoffmasse umspritzt wird.

Der Krümmer 1 mit dem Kern 3 wird anschließend entformt, worauf der Kern 3 in Station C herausgespült wird, d. h. durch den Hohlraum bzw. den durchgehenden Kanal 4 läßt man eine alkalische Lösung 15 strömen, um den aus einem im alkalischen löslichen Kunststoff bestehenden Kern 3 aufzulösen.

Die alkalische Lösung mit dem darin gelösten Kunststoff wird anschließend in einem Behälter 16 durch Zugabe von Säure 17 angesäuert, worauf der Kunststoff ausfällt. Die Kunststoffmasse wird dann mit der Filtriereinrichtung 18 vom Filtrat 19 abgetrennt und kann dann nach dem Trocknen zum Hohlkörperspritzen des Kerns 3 der Spritzdüse 9 wieder zugeführt werden, nachdem sie, was in der Zeichnung nicht dargestellt ist, compoundiert, granuliert und gegebenenfalls mit Fließmittel und Füllstoff gemischt worden ist.

Wie erwähnt, eignet sich das erfindungsgemäße Verfahren zur Herstellung beliebiger Kunststoffgegenstände mit komplizierten Hinterschneidungen oder Hohlräumen.

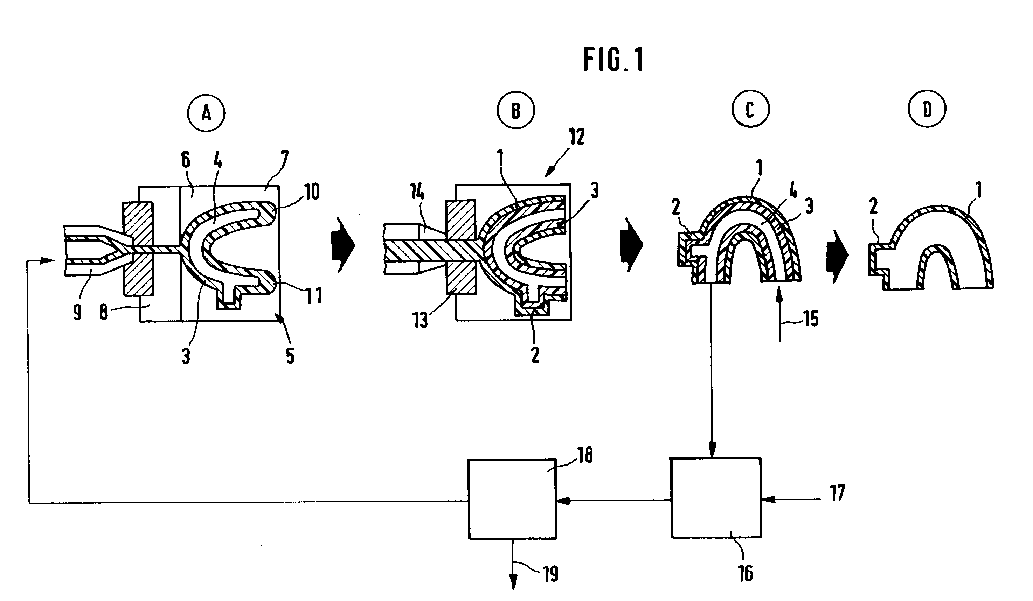

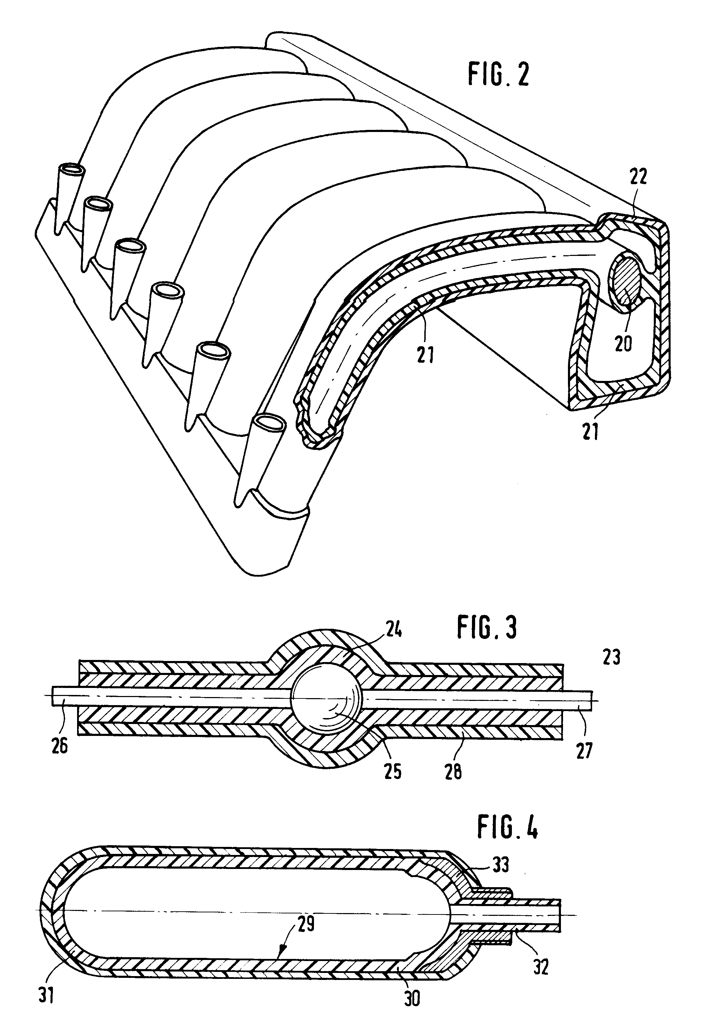

Zwei Ausführungsbeispiele sind in den Fig. 2 bis 4 der Zeichnung dargestellt, und zwar zeigen diese Figuren eine nach dem erfindungsgemäßen Verfahren hergestellte Sauganlage eines Kraftfahrzeuges in perspektivischer Ansicht mit teilweise weggebrochenen Teilen, einen Schnitt durch ein nach dem erfindungsgemäßen Verfahren hergestelltes Kugelventil sowie einen Schnitt durch einen nach dem erfindungsgemäßen Verfahren hergestellten Druckbehälter.

Gemäß Fig. 2 ist ein mit einem Kernlager 20 fixierter, wasserlöslicher Kunststoff-Hohlformkern 21 vorgesehen, der mit einem Kunststoffmantel 22 umspritzt ist, aus dem nach dem Lösen des Formkerns 21 und Entfernen des Kernlagers 20 die Ansauganlage gebildet wird.

Gemäß Fig. 3 ist ein im wesentlichen rohrförmiger, wasserlöslicher Kunststoff-Formkern 23 mit einem erweiterten Abschnitt 24 vorgesehen, in dem eine Kugel 25 koaxial angeordnet ist, die durch im Formkern 23 koaxial angeordnete Stifte 26 und 27 fixiert ist. Um den Formkern 23 ist ein Kunststoffgehäuse 28 gespritzt. Nach Entfernen der Stifte 26, 27 und Lösen des Formkerns wird ein aus der Kugel 25 und dem Gehäuse 28 bestehendes Kugelventil erhalten.

Gemäß Fig. 4 ist ein hohler, wasserlöslicher Kunststoff-Formkern 29 mit zylindrischem Hauptabschnitt 30, ausgebauchtem Boden 31 und Hals 32 im Bereich des Halses 32 mit einem Einleger 33 versehen und mit einem Kunststoffkörper 34 in Form eines Behälters umwickelt. Der Kern 29 wird nach dem Aushärten des Kunststoffkörpers 34 herausgelöst.

Die nachstehenden Beispiele dienen der weiteren Erläuterung der Erfindung:

Beispiel 1

Ein Copolymerisat aus Acrylsäure und Methacrylat mit einem Carboxylgruppen-Anteil von 26 Gew.-% wird mit der gleichen Menge getrocknetem Natriumsulfat in einem Compounder bei einer Temperatur von 200°C gemischt. Nach dem Granulieren wird das Gemisch in einer Spritzgußmaschine bei 200°C in üblicher Weise zu einem Formkörper verarbeitet, dessen Kennwerte in der nachstehenden Tabelle angegeben sind.

Beispiele 2 und 3

Das Beispiel 1 wird wiederholt, jedoch mit einem Carboxylgruppen-Anteil von 17 bzw. 27 Gew.-%, ohne bzw. mit einem Natriumsulfat-Anteil von 49,5% bzw. mit einem Zusatz von 1 Gew.-% Talkum als Fließhilfe. Die Kennwerte der so erhaltenen Formkörper sind in der nachstehenden Tabelle gleichfalls wiedergegeben.

## Tabelle

| Beispiel | | 1 | 2 | 3 |
|---|---|---|---|---|
| Carboxylgruppen | % | 26 | 17 | 27 |
| Salzanteil | Gew.-% | 50 | -- | 49,5 |
| Fließmittel | Gew.-% | 0 | 0 | 1 |
| Dichte | kg/dm$^3$ | 1,80 | 1,64 | 1,76 |
| Biege-E-Modul | N/mm$^2$ | 12197 | 4288 | 10946 |
| Bruchdehnung | % | 0,34 | 1,48 | 0,43 |
| Zugfestigkeit | N/mm$^2$ | 29,6 | 23,8 | 26,9 |
| Glasübergangs-temperatur | °C | 80 | 75 | 46 |
| Schlagzähigkeit | kJ/m$^2$ | 1,2 | 1,0 | 1,23 |
| MFI 210°C (Comp.) | G/10min | 2,4 | 4,7 | 5,1 |

Beispiel 4

Aus den Granulaten der Beispiele 1 bis 3 wurden Formkerne durch Spritzgießen hergestellt und mit Polyamid 66 mit 30% Glasfaseranteil umspritzt. Es konnte eine hervorragende Abzeichnung des formgebundenen Profils sowie der Oberflächennarbung nachgewiesen werden. Die Kerne ließen sich mit Natronlauge leicht herauslösen.

**Patentansprüche**

1. Verfahren zur Herstellung von Kunststoffgegenständen, die Hinterschneidungen aufweisen, insbesondere von Hohlkörpern, mit einem Formkern, der zumindest teilweise aus einem in wässriger Lösung löslichen Polymerisat besteht, dadurch gekennzeichnet, daß als Polymerisat ein einen thermoplastisch verarbeitbaren Kunststoff bildendes, Carboxyl-Gruppen aufweisendes Polymerisat verwendet wird, welches nach dem Lösen des Formkerns in der neutralen oder alkalischen Lösung aus der Lösung ausgefällt, abgetrennt und zur Kernherstellung wiederverwendet wird.

2. Verfahren nach Anspruch 1, dadurch gekennzeichnet, daß der Anteil der Carboxyl-Gruppen des Polymerisats mehr als 20 Gew.-% beträgt.

3. Verfahren nach Anspruch 1 oder 2, dadurch gekennzeichnet, daß als Polymerisat ein Copolymerisat aus (Meth)-Acrylsäure und (Meth)-Acrylat sowie ggfs. einem Termonomeren verwendet wird.

4. Verfahren nach einem der vorstehenden Ansprüche, dadurch gekennzeichnet, daß der Restmonomer-Anteil des Polymerisats höchstens 0,5 Gew.-% beträgt.

5. Verfahren nach einem der vorstehenden Ansprüche, dadurch gekennzeichnet, daß der Formkern bis zu 3 Gew.-% eines Gleitmittels enthält.

6. Verfahren nach einem der vorstehenden Ansprüche, dadurch gekennzeichnet, daß als alkalische Lösung zum Lösen des Polymerisats eine Alkalihydroxid- oder Carbonat-Lösung oder Ammoniak verwendet wird.

7. Verfahren nach einem der vorstehenden Ansprüche, dadurch gekennzeichnet, daß ein Polymerisat verwendet wird, in das feste alkalische Stoffe eingelagert sind.

8. Verfahren nach einem der vorstehenden Ansprüche, dadurch gekennzeichnet, daß die Lösung zum Lösen des Formkerns auf eine Temperatur erwärmt wird, die zwischen 80°C und unterhalb des Siedepunktes der Lösung liegt.

9. Verfahren nach eiem der vorstehenden Ansprüche, dadurch gekennzeichnet, daß ein Formkern aus einem Gemisch aus dem Polymerisat und einem Füllstoff verwendet wird.

10. Verfahren nach Anspruch 9, dadurch gekennzeichnet, daß der Polymerisat-Anteil mindestens 25 Gew.-% des Gemischs beträgt.

11. Verfahren nach Anspruch 9 oder 10, dadurch gekennzeichnet, daß der Füllstoff-Anteil mindestens 40 Gew.-% des Gemischs beträgt.

12. Verfahren nach einem der Ansprüche 9 bis 11, dadurch gekennzeichnet, daß als Füllstoff ein wasserlösliches Salz verwendet wird.

13. Verfahren nach Anspruch 12, dadurch gekennzeichnet, daß das Salz ein halogenfreies Salz ist.

14. Verfahren nach einem der vorstehenden Ansprüche, dadurch gekennzeichnet, daß der Formkern hohl ausgebildet wird.

15. Verfahren nach Anspruch 14, dadurch gekennzeichnet, daß der hohle Formkern durch Hohlkörperspritzen hergestellt wird.

**16.** Verfahren nach einem der vorstehenden Ansprüche, dadurch gekennzeichnet, daß das aus der Lösung ausgefällte, abgetrennte Polymerisat vor seiner Wiederverwendung compoundiert wird.

**17.** Verfahren nach einem der vorstehenden Ansprüche, dadurch gekennzeichnet, daß der Formkern teilweise mit metallischen Teilen verstärkt wird.

**18.** Verfahren nach einem der vorstehenden Ansprüche, dadurch gekennzeichnet, daß zur Anbringung von Einlegern am Kunststoffgegenstand der Formkern mit aus ihm herausragenden Einlegern versehen wird.

**19.** Formkern zur Herstellung von Kunststoffgegenständen mit Hinterschneidungen, insbesondere von Hohlkörpern, welche mindestens teilweise aus einem in wässriger Lösung löslichen Polymerisat besteht, dadurch gekennzeichnet, daß der Formkern einen E-Modul von wenigstens 5000 N/mm$^2$ aufweist und das Polymerisat ein einen thermoplastisch verarbeitbaren Kunststoff bildendes, Carboxyl-Gruppen aufweisendes Polymerisat ist, das in neutraler oder alkalischer wässriger Lösung löslich ist.

**20.** Formkern nach Anspruch 19, dadurch gekennzeichnet, daß der Anteil der Carboxyl-Gruppen des Polymerists mehr als 20 Gew.-% beträgt.

**21.** Formkern nach Anspruch 19 oder 20, dadurch gekennzeichnet, daß das Polymerisat ein Copolymerisat aus (Meth)-Acrylsäure und (Meth)-Acrylat sowie ggfs. eines Termonomeren ist.

**22.** Formkern nach einem der Ansprüche 19 bis 21, dadurch gekennzeichnet, daß der Restmonomer-Anteil des Polymerisats höchstens 0,5 Gew.-% beträgt.

**23.** Formkern nach einem der Ansprüche 19 bis 22, dadurch gekennzeichnet, daß er bis 3 Gew.-% eines Fließmittels enthält.

**24.** Formkern nach einem der Ansprüche 19 bis 23, dadurch gekennzeichnet, daß in das Polymerisat feste alkalische Stoffe eingelagert sind.

**25.** Formkern nach einem der Ansprüche 19 bis 24, dadurch gekennzeichnet, daß er aus einem Gemisch aus dem Polymerisat und einem Füllstoff besteht.

**26.** Formkern nach Anspruch 25, dadurch gekennzeichnet, daß der Polymersat-Anteil mindestens 25 Gew.-% des Gemischs beträgt.

**27.** Formkern nach Anspruch 25 oder 26, dadurch gekennzeichnet, daß der Füllstoff-Anteil mindestens 40 Gew.-% des Gemischs beträgt.

**28.** Formkern nach einem der Ansprüche 25 bis 27, dadurch gekennzeichnet, daß der Füllstoff ein wasserlösliches Salz ist.

**29.** Formkern nach Anspruch 28, dadurch gekennzeichnet, daß das Salz ein halogenfreies Salz ist.

**30.** Formkern nach einem der Ansprüche 19 bis 29, dadurch gekennzeichnet, daß er hohl ausgebildet ist.

**31.** Formkern nach einem der Ansprüche 19 bis 30, dadurch gekennzeichnet, daß er teilweise mit metallischen Teilen verstärkt ist.

**Claims**

**1.** A method for the production of undercut plastic articles, especially hollow items, using a mould core formed, at least in part, from a polymer which is soluble in aqueous solution, characterised in that the polymer is a thermoplastic containing carboxyl groups, and that the mould core, after being dissolved in neutral or alkaline solution, may be precipitated from that solution, separated from it and used again for the core production.

**2.** A method according to Claim 1, characterised in that the carboxyl group content of the polymer is greater than 20% by weight.

**3.** A method according to Claim 1 or 2, characterised in that the polymer comprises a copolymer of (meth)acrylic acid and (meth)acrylate as well as, if necessary, a termonomer.

**4.** A method according to any one of the foregoing Claims, characterised in that the residual monomer content of the polymer is maximally 0.5% by weight.

**5.** A method according to any one of the foregoing Claims, characterised in that the mould core contains up to 3% by weight of a lubricant.

**6.** A method according to any one of the foregoing Claims, characterised in that the alkaline solution used for dissolving the polymer is an alkali hydroxide or carbonate solution or an ammonia solution.

**7.** A method according to any one of the foregoing Claims, characterised in that a polymer is used which has solid alkaline substances embedded in it.

**8.** A method according to any one of the foregoing Claims, characterised in that the solution used to dissolve the mould core is heated to a temperature between 80°C and the boiling point of the solution.

**9.** A method according to any one of the foregoing Claims, characterised in that the mould core comprises a mixture of the polymer and a filling material.

**10.** A method according to Claim 9, characterised in that the polymer content is at least 25% by weight of the mixture.

**11.** A method according to either Claim 9 or 10, characterised in that the filling material content is at least 40% by weight of the mixture.

**12.** A method according to any one of Claims 9 to 11, characterized in that a water-soluble salt is used as the filling material.

**13.** A method according to Claim 12, characterized in that the salt is a halogen-free salt.

**14.** A method according to any one of the foregoing Claims, characterized in that the mould core is hollow.

**15.** A method according to Claim 14, characterised in that the hollow mould core is produced by injection moulding.

**16.** A method according to any one of the foregoing Claims, characterized in that the polymer precipitated and separated from the solution is compounded before being re-used.

**17.** A method according to any one of the foregoing Claims, characterised in that the mould core is in part reinforced by metal sections.

**18.** A method according to any one of the foregoing Claims, characterised in that inserts project from the mould core so that the plastic article also has inserts.

**19.** A mould core for the production of undercut plastic articles, especially hollow items, comprising, at least in part, a polymer which is soluble in aqueous solution, characterised in that the mould core has a modulus of elasticity of at least 5,000 N/mm$^2$ and that the polymer is a thermoplastic having carboxyl groups which is soluble in neutral or alkaline aqueous solution.

**20.** A mould core according to Claim 19, characterised in that the carboxyl group content of the polymer is greater than 20% by weight.

**21.** A mould core according to either Claim 19 or 20, characterised in that the polymer comprises a copolymer of (meth)acrylic acid and (meth)acrylate as well as, if necessary, a termonomer.

**22.** A mould core according to any one of Claims 19 to 21, characterised in that the residual monomer content of the polymer is maximally 0.5% by weight.

**23.** A mould core according to any one of Claims 19 to 22, characterised in that it contains up to 3% by weight of a plasticizer.

**24.** A mould core according to any one of Claims 19 to 23, characterised in that solid alkaline substances are embedded in the polymer.

**25.** A mould core according to any one of Claims 19 to 24, characterised in that it comprises a mixture of the polymer and a filling material.

**26.** A mould core according to Claim 25, characterised in that the polymer content is at least 25% by weight of the mixture.

**27.** A mould core according to either Claim 25 or 26, characterised in that the filling material content is at least 40% by weight of the mixture.

**28.** A mould core according to any one of Claims 25 to 27, characterised in that a water-soluble salt is used as the filling material.

**29.** A mould core according to Claim 28, characterised in that the salt is a halogen-free salt.

**30.** A mould core according to any one of Claims 19 to 29, characterised in that it is hollow.

**31.** A method according to any one of Claims 19 to 30, characterised in that it is in part reinforced by metal sections.

**Revendications**

**1.** Procédé pour la fabrication d'objets en matière plastique présentant des contre-dépouilles, en particulier de corps creux, à l'aide d'un noyau de moule qui est constitué au moins en partie, d'un polymère soluble dans une solution alcaline, caractérisé en ce que, en tant que polymère, on utilise un polymère comportant des groupes carboxyle, formant une matière plastique apte à l'usinage thermoplastique, qui, après la dissolution du noyau de moule, est séparée de la solution par précipitation dans la solution neutre ou alcaline, isolée et réutilisée pour la fabrication du noyau.

**2.** Procédé selon la revendication 1, caractérisé en ce que la proportion des groupes carboxyle du polymère est de plus de 20 % en poids.

**3.** Procédé selon la revendication 1 ou 2, caractérisé en ce que, en tant que polymère, on utilise un copolymère d'acide (méth)acrylique et de (méth)acrylate, ainsi qu'éventuellement d'un termonomère.

**4.** Procédé selon l'une quelconque des revendications précédentes, caractérisé en ce que la teneur en reste de monomère du polymère est au maximum de 0,5 % en poids.

**5.** Procédé selon l'une quelconque des revendications précédentes, caractérisé en ce que le noyau de moule contient jusqu'à 3 % en poids d'un lubrifiant.

**6.** Procédé selon l'une quelconque des revendications précédentes, caractérisé en ce que, en tant que solution alcaline pour la dissolution du polymère, on utilise une solution d'un hydroxyde ou carbonate de métal alcalin ou d'ammoniac.

**7.** Procédé selon l'une quelconque des revendications précédentes, caractérisé en ce que l'on utilise un polymère dans lequel sont incorporées des substances alcalines.

**8.** Procédé selon l'une quelconque des revendications précédentes, caractérisé en ce que la solution pour la dissolution du noyau de moule est chauffée à une température qui est comprise entre 80°C et une température au-dessous de la température d'ébullition de la solution.

**9.** Procédé selon l'une quelconque des revendications précédentes, caractérisé en ce que l'on utilise un noyau de moule constitué d'un mélange du polymère et d'une charge.

**10.** Procédé selon la revendication 9, caractérisé en ce que la proportion de polymère représente au moins 25 % en poids du mélange.

**11.** Procédé selon la revendication 9 ou 10, caractérisé en ce que la proportion de charge représente au moins 40 % en poids du mélange.

**12.** Procédé selon l'une quelconque des revendications 9 à 11, caractérisé en ce que, en tant que charge, on utilise un sel soluble dans l'eau.

**13.** Procédé selon la revendication 12, caractérisé en ce que le sel est un sel exempt d'halogène.

**14.** Procédé selon l'une quelconque des revendications précédentes, caractérisé en ce que le noyau de moule est creux.

**15.** Procédé selon la revendication 14, caractérisé en ce que le noyau de moule creux est fabriqué par injection de corps creux.

**16.** Procédé selon l'une quelconque des revendications précédentes, caractérisé en ce que le polymère séparé de la solution par précipitation et isolé, est mélangé avant sa réutilisation.

**17.** Procédé selon l'une quelconque des revendications précédentes, caractérisé en ce que le noyau de moule est partiellement renforcé avec des éléments métalliques.

**18.** Procédé selon l'une quelconque des revendications précédentes, caractérisé en ce que, pour l'application d'inserts sur l'objet en matière plastique, on munit le noyau de moule d'inserts sortant de celui-ci.

**19.** Noyau de moule pour la fabrication d'objets en matière plastique à contre-dépouilles, en particulier de corps creux, qui est constitué au moins en partie d'un polymère soluble dans une solution aqueuse, caractérisé en ce que le noyau de moule présente un module d'élasticité d'au moins 5 000 N/mm$^2$ et le polymère est un polymère, comportant des groupes carboxyle, qui forme une matière synthétique apte à l'usinage thermoplastique et qui est soluble dans une solution aqueuse neutre ou alcaline.

**20.** Noyau de moule selon la revendication 19, caractérisé en ce que la teneur en groupes carboxyle du polymère est de plus de 20 % en poids.

**21.** Noyau de moule selon la revendication 19 ou 20, caractérisé en ce que le polymère est un copolymère d'acide (méth) acrylique et d'un (méth)acrylate, ainsi qu'éventuellement d'un termonomère.

**22.** Noyau de moule selon l'une quelconque des revendications 19 à 21, caractérisé en ce que la teneur en reste de monomère du polymère est au maximum de 0,5 % en poids.

**23.** Noyau de moule selon l'une quelconque des revendications 19 à 22, caractérisé en ce qu'il contient jusqu'à 3 % en poids d'un agent d'écoulement.

**24.** Noyau de moule selon l'une quelconque des revendications 19 à 23, caractérisé en ce que des substances alcalines solides sont incorporées dans le polymère.

**25.** Noyau de moule selon l'une quelconque des revendications 19 à 24, caractérisé en ce qu'il est constitué d'un mélange du polymère et d'une charge.

**26.** Noyau de moule selon la revendication 25, caractérisé en ce que la proportion de polymère représente au moins 25 % en poids du mélange.

**27.** Noyau de moule selon la revendication 25 ou 26, caractérisé en ce que la proportion de charge représente au moins 40 % en poids du mélange.

**28.** Noyau de moule selon l'une quelconque des revendications 25 à 27, caractérisé en ce qua charge est un sel soluble dans l'eau.

**29.** Noyau de moule selon la revendication 28, caractérisé en ce que le sel est un sel exempt d'halogène.

**30.** Noyau de moule selon l'une quelconque des revendications 19 à 29, caractérisé en ce qu'il est creux.

**31.** Noyau de moule selon l'une quelconque des revendications 19 à 30, caractérisé en ce qu'il est partiellement renforcé avec des éléments métalliques.

# FIG.1

EP 0 313 923 B1

FIG. 2

FIG. 3

FIG. 4